# EUROPEAN PATENT APPLICATION

(11) **EP 4 311 716 A1**
(43) Date of publication of application: **31.01.2024**
(21) Application number: 22186948.0
(22) Date of filing: 26.07.2022
(51) Int. Cl.: B60L 53/14, B60L 53/30, B60L 53/66, B60L 53/68, H02J 9/06, H02J 9/00

(54) **ELECTRIC VEHICLE FUELLING SYSTEM**

(71) Applicant: ABB E-Mobility B.V., 2629 JG Delft (NL)
(72) Inventor: CHEN, Pan, Pudong New Area, 201315 (CN); WEI, Vincent-Cong, 210018 Baoshan District, Shanghai (CN); QI, Sven, 2497CN Den Haag (NL)
(74) Representative: Maiwald GmbH

(57) **Abstract**

The invention relates to an electric vehicle fuelling system, EVFS, (100) comprising:
an AC grid input (10), configured to receive AC power (V_{AC}) from an electric grid (200);
a main control chip (30), configured to control the EVFS (100) to perform a charge session of an electric vehicle (300) using the AC power (V_{AC});
a power module (20), connected to the grid input (10) and configured to supply the main control chip (30) with a supply power (Vs);
characterized by a power loss detection module(40); wherein the power loss detection module (40) is configured to provide a power loss signal (S_{P}), if the power loss detection module (40) detects that the AC power (V_{AC}) is unavailable;
wherein the power module (20) comprises a super capacitor (23), configured to store an auxiliary supply power; wherein the power module (20) is configured to supply the main control chip (30) with the auxiliary supply power;
wherein, if the main control chip (30) receives the power loss signal (S_{P}), the main control chip (30) is configured to save session information (Is) of the charging session;
wherein the session information (Is) comprises information needed to continue or complete the charging session.

## Description

### Field of the invention

The present disclosure relates to an electric vehicle fuelling system, EVFS, and a corresponding method. In particular, the present disclosure relates to an EVFS with a super capacitor.

### Technical background

Electric vehicle fuelling systems, EVFS, are used to charge electric vehicles. When the charging session is over and the electric vehicle is fully charged, the EVFS provides information about the amount of charged power as well as billing information.

The EVFS is usually supplied by the AC power of the electric grid that is also used to charge the electric vehicle. However, when the electric grid fails during a charging session, the EVFS shuts down and valuable information about the charging session is lost.

Thus, there is a need for an improved EVFS, in particular in a scenario of grip power failure.

### Summary

The present invention is defined by the subject-matter of the independent claims. Additional features of the invention are presented in the dependent claims.

According to an aspect of the invention, an electric vehicle fuelling system, EVFS, comprises: An alternating current, AC, grid input, configured to receive AC power from an electric grid. A main control chip, configured to control the EVFS to perform a charge session of an electric vehicle using the AC power. A power module connected to the grid input and configured to supply the main control chip with a supply power. A power loss detection module, wherein the power loss detection module is configured to provide a power loss signal, if the power loss detection module detects that the AC power is unavailable. The power module comprises a super capacitor, configured to store an auxiliary supply power, wherein the power module is configured to supply the main control chip with the auxiliary supply power. If the main control chip receives the power loss signal, the main control chip is configured to save session information of the charging session. The session information comprises information needed to continue or complete the charging session, in particular when the AC power is available again.

In other words, the super capacitor is configured to store energy. This stored energy is used to continue to provide supply power to the main control chip in the case of grid power loss. Thus, a shutdown of the main control chip can be delayed for a small period of time. During this period of time, the main control chip can save the session information needed to continue or complete the charging session, in particular for billing purpose, so that there will be no data loss and a transaction can be closed in time.

The term "charging session", as used herein, relates to a process of charging an electric vehicle by the EVFS.

The term "super capacitor", as used herein, relates to a capacitor that is sized in a magnitude that allows to store enough energy to supply a control chip for a short amount of time to execute mandatory operations. Compared to compensation capacitors, the super capacitor has a significantly bigger capacitance.

Preferably, the main control chip comprises a general-purpose input/output pin, GPIO, wherein the power loss detection module is connected to the main control chip via the GPIO.

The improved EVFS provides a user a safe mechanism in case of blackout and power loss due to the upstream overload, in public charging station, it enables user to unplug the charging cable without physical intervention, and provide more precise billing information when an ongoing charging session is stopped by the power loss.

Consequently, an improved EVFS is provided that uses a simple implementation to prevent loss of session information in the case of power grid failure.

In a preferred embodiment, the super capacitor comprises a capacitance that allows to provide supply power to the main control chip to save the session information, if the AC power is unavailable.

Preferably, the super capacitor is configured to provide supply power to the main control chip if the AC power is unavailable for at least 3 seconds, further preferably for at least 5 seconds.

In a preferred embodiment, the super capacitor comprises a capacitance of at least 10000uF.

Preferably, the super capacitor comprises a capacitance of at least 20000uF, further preferably of 22000uF, which can provide supply power to the main control chip for 10 seconds if the AC power is unavailable.

Preferably, the super capacitor is a 12V DC capacitor.

In a preferred embodiment, the power module is configured to load the super capacitor using the AC power, if the AC power is available.

Thus, the super capacitor is fully charged when the electric grid is available.

In a preferred embodiment, the power module comprises an AC/DC-converter, connected to the AC grid input, wherein the AC/DC-converter is configured to convert the AC power into DC power, wherein the DC power is the supply power for the main control chip.

In other words, the AC/DC-converter is disposed between the AC grid input and the main control chip. The AC/DC-converter comprises an AC input, connected to the grid input, and a DC output, connected to the main control chip. The AC/DC-converter is configured to convert the AC power of the electric grid into DC power in order to power the main control chip.

Preferably, the AC/DC-converter allows an input of 120V-240V AC and provides a DC output of 12V.

Preferably, the power module comprises a DC/DC-converter, connected to the AC/DC-converter, wherein the DC/DC-converter is configured to convert the DC power into the supply power for the main control chip. In other words, the DC/DC converter comprises a DC input, connected to the DC output of the AC/DC converter, and a DC output, connected to the main control chip. The DC/DC-converter is configured to convert the DC power of the AC/DC-converter into the supply power for the main control chip. The DC/DC-converter is necessary, when the DC output of the AC/DC-converter does not comply with the specification of the main control chip. For example, the AC/DC-converter provides a 12V DC output but the main control chip needs a 3.3V DC power supply. Consequently, the DC/DC-converter allows the power module to supply the main control chip with supply power using the grid power.

Preferably, the DC/DC-converter allows a DC input of 12V and provides a DC output of 12V.

In a preferred embodiment, the AC/DC-converter is connected to the super capacitor, wherein the AC/DC-converter is configured to load the super capacitor using the DC power.

The AC/DC-converter preferably comprises an AC-input that is connected to the AC grid input and a DC-output that is connected to the super capacitor.

In a preferred embodiment, the EVFS comprises a storage unit, connected to the main control chip, wherein saving the transaction information of the charge session comprises storing, by the main control chip, the transaction information in the storage module.

In a preferred embodiment, the EVFS comprises a communication module, connected to the main control chip, wherein saving the transaction information of the charge session comprises, instructing, by the main control chip, the communication module to transmit the transaction information to a backend server.

In a preferred embodiment, the communication module comprises a mobile radio module, a Wi-Fi module and/or an Ethernet module.

In a preferred embodiment, the storage module is flash memory.

Preferably, the storage module is on-chip flash memory of the main control chip. Alternatively, the storage module is flash memory that is separated from the main control chip.

In a preferred embodiment, the session information comprises a quantity of charged AC power and/or a price of the AC power.

In a preferred embodiment, the EVFS comprises a measurement module configured to determine the quantity of charged AC power. The measurement module is configured to provide the quantity of charged AC power to the main control chip.

Preferably, the measurement module is configured to measure a measured voltage and a measured current of the AC power over time and thus determines the quantity of charged AC power that the electric vehicle has been charged with.

In a preferred embodiment, the EVFS comprises a power switch, connected to the main control chip, wherein the power switch is configured to control an energy flow from the electric grid to the electric vehicle. The main control chip is configured to control the power switch.

In a preferred embodiment, the EVFS comprises a display module, connected to the main control chip, wherein the display module is configured to display the session information.

According to an aspect of the invention a method for operating an electric vehicle fuelling system, EVFS, comprises the following steps. Receiving, by an AC grid input of the EVFS, AC power from an electric grid. Controlling, by a main control chip of the EVFS, the EVFS to perform a charge session of an electric vehicle using the AC power. Supplying, by a power module of the EVFS, connected to the grid input, the main control chip with a supply power. Detecting, by a power loss detection module of the EVFS, that the AC power is unavailable, and providing a power loss signal. Supplying, by a super capacitor of the power module, the main control chip with an auxiliary supply power. If the main control chip receives the power loss signal, saving, by the main control chip, session information of the charging session. The session information comprises information needed to continue or complete the charging session, in particular when the AC power is available again.

The subject matter of the invention will be explained in more detail in the following text with reference to preferred exemplary embodiments, which are illustrated in the attached drawings, in which:

### Brief description of the drawings

Exemplary embodiments of the invention will be described in the following with reference to the accompanying drawings:
- Fig.1: shows a schematic view of an EVFS; and
- Fig.2: shows a method for operating the EVFS.

The reference symbols used in the drawings, and their meanings, are listed in summary form in the list of reference symbols. In principle, identical assembly parts are provided with the same reference symbols in the figures.

Preferably, the functional modules and/or the configuration mechanisms are implemented as programmed software modules or procedures, respectively; however, one skilled in the art will understand that the functional modules and/or the configuration mechanisms can be implemented fully or assembly partially in hardware.

### Detailed description of exemplary embodiments

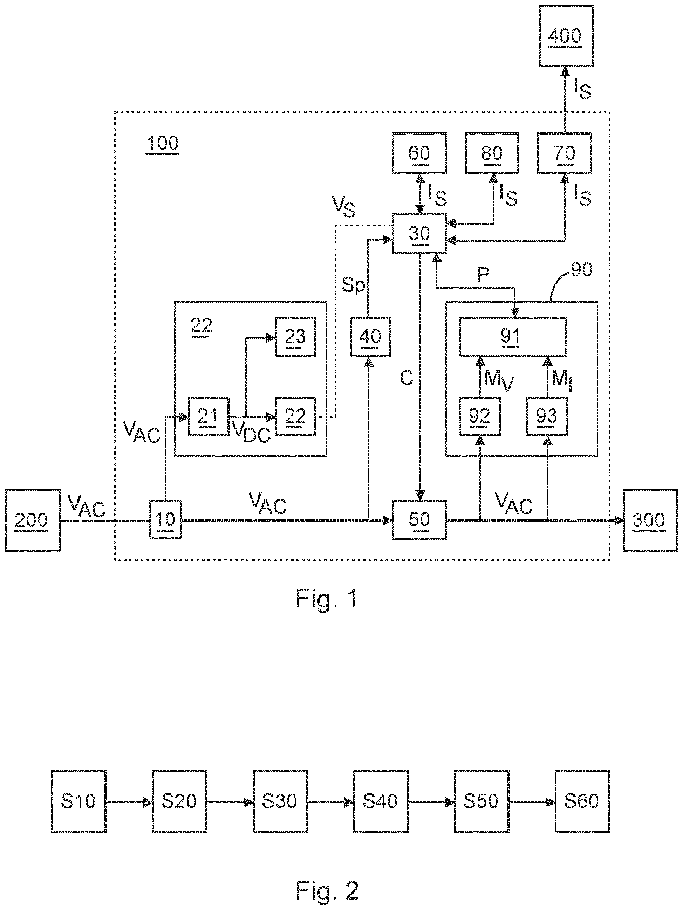

Fig.1 shows a schematic view of an electric vehicle fuelling system, EVFS, 100. The EVFS 100 comprises an alternating current, AC, grid input 10. The AC grid input 10 is configured to receive an AV power V_{AC} from an AC power grid 200. The AC power V_{AC} is used by the EVFS to fuel, or in other words charge, an electric vehicle, EV, 300. The EVFS thus comprises a main control chip 30 and a power switch 50. The power switch 50 is disposed between AC grid input 10 and a not shown AC grid output. The AC grid output is disposed between the power switch 50 and the EV 300. In other words, the EVFS 100 comprises a power cable running from the AC grid input 10 to the AC grid output, connecting the AC power grid 200 with the EV 300 through the EVFS 100, wherein the power switch 50 is disposed in the power cable between the AC grid input 10 and the AC grid output. The power switch 50 controls the AC power V_{AC} that is provided to the EV 300. The power switch 50 is connected to the main control chip 30. The main control chip 30 is configured to control the power switch 50 by providing a power switch control signal C to the power switch 50. In other words, when an EV 300 wants to get charged by the EVFS 100, the main control chip 30 provides the power switch 50 with the respective power switch control signal C so that the power switch 50 provides the needed AV power V_{AC} to the EV 300. The power switch 50 thus controls the current and the voltage of the AC power V_{AC} provided to the EV 300.

The EVFS 100 further comprises a measurement module 90 is connected to the main control chip 30 and the AC power V_{AC}. The measurement module 90 is configured to determine a quantity of charged AC power P of a charging session. In other words, the measurement module 90 monitors the AC power V_{AC} during charging of the EV 300 and determines how much AC power V_{AC} has been provided to the EV 300. Therefore, the measurement module 90 comprises a current sensor 93 and a voltage sensor 92, wherein the current sensor 93 measures the current of the AC power V_{AC} over the time of charging, wherein the voltage sensor 92 measures the voltage of the AC power V_{AC} over the time of charging. The voltage sensor 92 and the current sensor 93 are disposed between the power switch 50 and the AC grid output. The voltage sensor 92 and the current sensor 93 are connected a measurement chip 91 of the measurement module 90. The measurement chip 91 uses the provided voltage and current of the AC power V_{AC} over time and determines the quantity of charged AC power P. The quantity of charged AC power P is provided to the main control chip 30, preferably in a predetermined sampling rate, for example once per second.

The EVFS 100 comprises a power module 20 that is connected to the AC grid input 10. The power module 20 is also connected to the main control chip 30 and is configured to supply the main control chip 30 with supply power Vs. In this case, the power module 20 comprises an AC/DV-converter 21, which is configured to convert the AC power V_{AC} into a DC power V_{DC}. More specifically, the AC/DC-converter 21 comprises an 120-240V AC input that inputs the AC power V_{AC}, and a 12 V DC output that outputs 12V of DC power V_{DC}. As the main control chip 30 runs on 3.3V, the power module 20 comprises a DC/DC-converter 22 that comprises a 12V DC input that is connected to the 12V DC output of the AC/DC-converter, and a 3,3V DC output, in this case the supply power Vs, that is connected to the main control chip 30. In other words, the power module 20 is configured to supply the main control chip 30 with supply power Vs using the AC power V_{AC} of the electric grid 200.

However, if the electric grid 200, or a connection to the electric grid 200, fails, the power module 20 is not able to provide supply power Vs to the main control chip 30. Thus, not only the charging session of the EV 300 ends, but the main control chip 30 loses valuable information about the charging session. This information is referred to as session information Is and comprises for example the quantity of f charged AC power P already provided to the EV as well as the present price per unit of the AC power, V_{AC}. Thus, necessary information for billing the charging session until the electric grid 200 fails might be lost.

Therefore, the power module 20 comprises a super capacitor 23 that is connected to the AC/DC-converter 21. When the AC power V_{AC} is available, the power module 20 charges the super capacitor 23 with its 12V DC output. Consequently, the super capacitor 23 is a 12V capacitor. In order to provide the functionality of a short time energy source, the super capacitor 23 has a relatively high capacitance, for example 10000uF.

If the AC power is unavailable, the DC output of the AC/DC-converter also falls down. The super capacitor 23 that is connected between the DC output of the AC/DC-converter and the DC input of the DC/DC-converter consequently, serves as a power supply until the super capacitor 23 is emptied. Thus, the DC/DC-converter can provide the main control chip 30 for a short time frame after the AC power becomes unavailable using the power stored in the super capacitor 23. This power is also referred to as auxiliary supply power. Due to the circuit as described, no further switching control has to be added to implement the described functionality.

However, the main control chip 30 needs to be aware that the AC power became unavailable in order to execute some last commands before shutting down. Thus, the EVFS 100 comprises a power loss detection module 40, which is connected to the AC power V_{AC} and the main control chip 30. The power loss detection module 40 detects if the AC power V_{AC} fails and becomes unavailable, and provides a power loss signal S_{P} to the main control chip 30. Thus, the main control chip 30 becomes aware that no AC power V_{AC} is available and a shutdown of the EVFS and the main control chip 30 is imminent. At this point, the main control chip 30 is already supplied with supply power Vs based on the super capacitor 23.

If the main control chip 30 receives the power loss signal S_{P}, the main control chip 30 saves the session information Is. For example, the EVFS 100 comprises a storage unit 60, in particular a flash memory, into which the main control chip 30 saves the session information Is. Alternatively or additionally, the EVFS 100 comprises a communication module 70, which is configured to transmit data to a backend server 400. Thus, the EVFS 100 transmits the session information Is to the backend server. Thus, when the AC power V_{AC} will be available again, the main control chip 30 can read the session information Is from the storage unit 60 or from the backend server 400.

Thus, the EVFS 100 provides a simple implementation of an improved EVFS 100 that does not lose the session information Is in case of an electric grid failure.

In addition, the EVFS 100 comprises a display 80, in particular an LED display, which is configured to display the session information Is to a user, in particular the owner of the EV.

Fig.2 shows a method for operating the EVFS 100.

In a step S10, an AC grid input 10 of the EVFS 100, received AC power VAC from an electric grid 200. In another step S20, a main control chip 30 of the EVFS 100 controls the EVFS 100 to perform a charge session of an electric vehicle 300 using the AC power VAC. In another step S30, a power module 20 of the EVFS 100, connected to the grid input 10, supplies the main control chip 30 with a supply power VS. In another step S40, a power loss detection module 40 of the EVFS 100, detects that the AC power VAC is unavailable, and provides a power loss signal SP. In another step S50, a super capacitor 23 of the power module 20, supplies the main control chip 30 with an auxiliary supply power. In another step S60, if the main control chip 30 receives the power loss signal SP, the main control chip 30 saves session information IS of the charging session, wherein the session information IS comprises information needed to continue or complete the charging session, in particular when the AC power VAC is available again.

### List of reference symbols

- 100: electric vehicle fuelling system
- 10: AC grid input
- 20: power module
- 21: AC/DC-converter
- 22: DC/DC-converter
- 23: super capacitor
- 30: main control chip
- 40: power loss detection module
- 50: power switch
- 60: storage unit
- 70: communication module
- 80: display
- 90: measurement module
- 91: measurement chip
- 92: voltage sensor
- 93: current sensor
- 200: electric grid
- 300: electric vehicle
- 400: backend server
- V_{AC}: AC power
- V_{DC}: DC power
- V_{S}: supply power
- S_{P}: power loss signal
- M_{V}: measured voltage
- M_{I}: measured current
- I_{S}: session information
- P: quantity of charged AC power
- C: power switch control signal

## Claims

1. Electric vehicle fuelling system, EVFS, (100) comprising:
an AC grid input (10), configured to receive AC power (V_{AC}) from an electric grid (200);
a main control chip (30), configured to control the EVFS (100) to perform a charge session of an electric vehicle (300) using the AC power (V_{AC});
a power module (20), connected to the grid input (10) and configured to supply the main control chip (30) with a supply power (Vs);
**characterized by** a power loss detection module (40); wherein the power loss detection module (40) is configured to provide a power loss signal (S_{P}), if the power loss detection module (40) detects that the AC power (V_{AC}) is unavailable;
wherein the power module (20) comprises a super capacitor (23), configured to store an auxiliary supply power; wherein the power module (20) is configured to supply the main control chip (30) with the auxiliary supply power;
wherein, if the main control chip (30) receives the power loss signal (S_{P}), the main control chip (30) is configured to save session information (Is) of the charging session;
wherein the session information (Is) comprises information needed to continue or complete the charging session.

2. EVFS of any one of the preceding claims,
wherein the super capacitor (23) comprises a capacitance that allows to provide supply power (Vs) to the main control chip (30) to save the session information (Is), if the AC power (V_{AC}) is unavailable.

3. EVFS of any one of the preceding claims,
wherein the super capacitor (23) comprises a capacitance of at least 10000uF.

4. EVFS of any one of the preceding claims,
wherein the power module (20) is configured to load the super capacitor (23) using the AC power (V_{AC}), if the AC power (V_{AC}) is available.

5. EVFS of any one of the preceding claims,
wherein the power module (20) comprises an AC/DC-converter (21), connected to the AC grid input (10), wherein the AC/DC-converter (21) is configured to convert the AC power (V_{AC}) into DC power (V_{DC}), wherein the DC power (V_{DC}) is the supply power (Vs) for the main control chip (30).

6. EVFS of any one of the preceding claims,
wherein the AC/DC-converter (21) is connected to the super capacitor (23), wherein the AC/DC-converter (21) is configured to load the super capacitor (23) using the DC power (V_{DC}).

7. EVFS of any one of the preceding claims,
comprising a storage unit (60), connected to the main control chip (30), wherein saving the transaction information of the charge session comprises storing, by the main control chip (30), the transaction information in the storage module (60).

8. EVFS of any one of the preceding claims,
comprising a communication module (70), connected to the main control chip (30), wherein saving the transaction information of the charge session comprises, instructing, by the main control chip (30), the communication module (70) to transmit the transaction information to a backend server (400).

9. EVFS of claim 8,
wherein the communication module (70) comprises a mobile radio module, a Wi-Fi module and/or Ethernet module.

10. EVFS of any one of the preceding claims,
wherein the storage module (60) is flash memory.

11. EVFS of any one of the preceding claims,
wherein the session information (Is) comprises a quantity of charged AC power (P) and/or a price of the AC power.

12. EVFS of claim 11,
comprising a measurement module (90) configured to determine the quantity of charged AC power (P);
wherein the measurement module (90) is configured to provide the quantity (P) of charged AC power to the main control chip (30).

13. EVFS of any one of the preceding claims, comprising:
a power switch (50), connected to the main control chip (30), wherein the power switch (50) is configured to control an energy flow from the electric grid (200) to the electric vehicle (300);
wherein the main control chip (30) is configured to control the power switch (50).

14. EVFS of any one of the preceding claims, comprising:
a display module (80), connected to the main control chip (30), wherein the display module (80) is configured to display the session information (Is).

15. Method for operating an electric vehicle fuelling system, EVFS, (100) comprising the steps:
receiving (S10), by an AC grid input (10) of the EVFS (100), AC power (V_{AC}) from an electric grid (200);
controlling (S20), by a main control chip (30) of the EVFS (100), the EVFS (100) to perform a charge session of an electric vehicle (300) using the AC power (V_{AC});
supplying (S30), by a power module (20) of the EVFS (100), connected to the grid input (10), the main control chip (30) with a supply power (Vs);
**characterized by**
detecting (S40), by a power loss detection module (40) of the EVFS (100), that the AC power (V_{AC}) is unavailable, and providing a power loss signal (S_{P}),
supplying (S50), by a super capacitor (23) of the power module (20), the main control chip (30) with an auxiliary supply power;
if the main control chip (30) receives the power loss signal (S_{P}), saving (S60), by the main control chip (30), session information (Is) of the charging session;
wherein the session information (Is) comprises information needed to continue or complete the charging session.
